# EUROPEAN PATENT SPECIFICATION

(11) **EP 4 624 859 B1**
(45) Date of publication and mention of the grant of the patent: **26.08.2026**
(21) Application number: 25164785.5
(22) Date of filing: 19.03.2025
(51) Int. Cl.: F28F 3/12, F28F 9/02, F28F 9/26

(54) **HEAT EXCHANGE MODULE**
WÄRMETAUSCHERMODUL
MODULE D'ÉCHANGE DE CHALEUR

(30) Priority: 25.03.2024 JP 2024047853
(43) Date of publication of application: 01.10.2025
(73) Proprietor: Nifco Inc., Kanagawa 239-8560 (JP); ZACROS Corporation, Tokyo 112-0002 (JP)
(72) Inventor: OKUMA, Ryoya, 239-8560 Yokosuka-shi, Kanagawa-ken (JP); OKABAYASHI, Shunsuke, 239-8560 Yokosuka-shi, Kanagawa-ken (JP); ICHIMARU, Naohiro, 112-0002 Tokyo (JP); MORINO, Atsushi, 112-0002 Tokyo (JP)
(74) Representative: Daub, Thomas

(56) References cited:
- US-A1- 2023 238 607
- US-A1- 2024 072 332

## Description

### BACKGROUND

### 1. Field

The following description relates to a heat exchange module.

### 2. Description of Related Art

An example of a temperature control system includes two pipe units extending in an extension direction, and a plurality of heat exchangers arranged between the pipe units. The heat exchangers are each plate-shaped and extend along a plane that is defined by the extension direction and a widthwise direction orthogonal to the extension direction. The heat exchangers are arranged next to one another at intervals in the extension direction of the two pipe units. Each of the heat exchangers includes a passage for a heat medium.

The pipe units are cylindrical. A heat medium before heat exchange is supplied to one of the two pipe units, and the heat medium after heat exchange is discharged to the other one of the two pipe units through the passage of the heat exchanger (for example, refer to Japanese Laid-Open Patent Publication No. 2012-180876).

Since the pipe units are cylindrical, it is difficult to arrange other components of the temperature control system or a temperature-control subject of the temperature control system around the pipe units. Accordingly, the temperature control system may occupy a space that is larger than its actual size.

### SUMMARY

The invention defines a heat exchange module according to claim 1.

### BRIEF DESCRIPTION OF THE DRAWINGS

Fig. 1 is an exploded perspective view showing the structure of a heat exchange module in accordance with an embodiment.
Fig. 2 is an exploded perspective view showing the structure of a heat exchanging device having three heat exchange modules.
Fig. 3 is a cross-sectional view showing the structure of a base member taken along a plane defined by a flow direction and a longitudinal direction.
Fig. 4 is a front view showing the base member of the heat exchange module.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

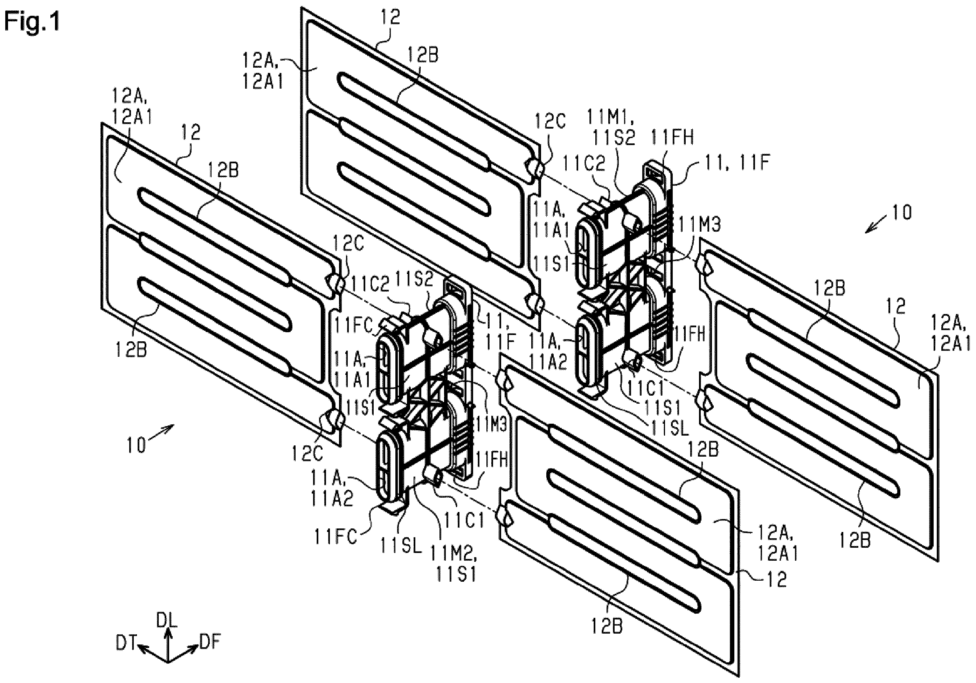

An embodiment of a heat exchange module will now be described with reference to Figs. 1 to 4.

### Heat Exchange Module

The heat exchange module will be described with reference to Fig. 1. Fig. 1 shows two heat exchange modules.

As shown in Fig. 1, a heat exchange module 10 includes a base member 11 and a heat exchanger 12. The base member 11 has a flattened tubular shape. The base member 11 is a resin mold article. The base member 11 includes a first tubular portion 11M1 and a second tubular portion 11M2. The first tubular portion 11M1 and the second tubular portion 11M2 are connected to each other by an intermediate portion 11M3 arranged between the first tubular portion 11M1 and the second tubular portion 11M2.

Each of the tubular portions 11M1 and 11M2 of the base member 11 includes a flow passage 11A through which a heat medium flows. The direction in which the heat medium flows, that is, the direction in which the flow passage 11A extends, is a flow direction DF. The direction orthogonal to the flow direction DF is a longitudinal direction DL. The direction orthogonal to a plane defined by the flow direction DF and the longitudinal direction DL is a thickness-wise direction DT. The first tubular portion 11M1 and the second tubular portion 11M2 are arranged next to each other in the longitudinal direction DL. Accordingly, two flow passages 11A are arranged next to each other in the longitudinal direction DL. The two flow passages 11A include a first flow passage 11A1 of the first tubular portion 11M1 and a second flow passage 11A2 of the second tubular portion 11M2.

The base member 11 has the form of a rectangular box in which a length in the longitudinal direction DL is greater than a width in the flow direction DF. The base member 11 has a thickness in the thickness-wise direction DT that is less than the width in the flow direction DF and the length in the longitudinal direction DL. Therefore, the base member 11 has a flattened box shape.

The base member 11 includes a first side surface 11S1 and a second side surface 11S2. The first side surfaces 11S1 extends along a plane defined by the flow direction DF and the longitudinal direction DL. The second side surface 11S2 opposes the first side surface 11S1 in the thickness-wise direction DT. The first side surface 11S1 and the second side surface 11S2 are both part of flat surfaces defining the flow passages 11A1 and 11A2 of the tubular portions 11M1 and 11M2. Therefore, the base member 11 includes two sets of the first side surface 11S1 and the second side surface 11S2 opposing the first side surface 11S1.

Each of the side surfaces 11S1 and 11S2 includes a connection portion to which the heat exchanger 12 is connected. The connecting portion projecting from the first side surface 11S1 is a first connecting portion 11C1. The first connecting portion 11C1 is tubular and extends in the thickness-wise direction DT. The connecting portion projecting from the second side surface 11S2 is a second connecting portion 11C2. The second connecting portion 11C2 is tubular and extends in the thickness-wise direction DT. Thus, a subject of heat exchange can be disposed along the side surfaces 11S1 and 11S2 of the base member 11.

Each of the tubular portions 11M1 and 11M2 includes a pair of fitting claws 11FC that projects from a corresponding one of the tubular portions 11M1 and 11M2. The two fitting claws 11FC are arranged at opposite sides of the corresponding one of the tubular portions 11M1 and 11M2 in the longitudinal direction DL. The fitting claws 11FC are located at a first tube end of the corresponding one of the tubular portions 11M1 and 11M2 in the flow direction DF.

The base member 11 includes a flange 11F. The flange 11F is connected to a second tube end of the first tubular portion 11M1 and a second tube end of the second tubular portion 11M2. The flange 11F includes a first flange end protruding from the first tubular portion 11M1 in the longitudinal direction DL, and a second flange end protruding from the second tubular portion 11M2 in the longitudinal direction DL.

The flange 11F includes four fitting holes 11FH. The fitting holes 11FH extend through the flange 11F in the flow direction DF. First two fitting holes 11FH are arranged at opposite sides of the first tubular portion 11M1 in the longitudinal direction DL, and second two fitting holes 11FH are arranged at opposite sides of the second tubular portion 11M2 in the longitudinal direction DL.

The base member 11 includes a sealing member 11SL. The sealing member 11SL is fitted to an outer surface of each of the tubular portions 11M1 and 11M2. The sealing member 11SL is arranged at the first tube end of the tubular portions 11M1 and 11M2 in the flow direction DF. The sealing member 11SL is annular and extends over the entire circumference of the tubular portions 11M1 and 11M2.

The heat exchanger 12 branches from the base member 11. The heat exchanger 12 includes a main body 12A. In a state attached to the base member 11, the main body 12A has a rectangular shape and extends along a plane defined by the thickness-wise direction DT and the longitudinal direction DL. The heat exchanger 12 includes two connectable portions 12C arranged next to each other in the longitudinal direction DL. Each connectable portion 12C is tubular and extends in the thickness-wise direction DT. The connectable portion 12C includes an end projecting from the main body 12A in the thickness-wise direction DT.

Two heat exchangers 12 are attached to a single base member 11. A first one of the two heat exchangers 12 is connected to the first connecting portions 11C1 of the tubular portions 11M1 and 11M2. In this case, a first one of the two connectable portions 12C is connected to the first connecting portion 11C1 of the first tubular portion 11M1, and a second one of the two connectable portions 12C is connected to the first connecting portion 11C1 of the second tubular portion 11M2. A second one of the two heat exchangers 12 is connected to the second connecting portions 11C2 of the tubular portions 11M1 and 11M2. In this case, a first one of the two connectable portions 12C is connected to the second connection portion 11C2 of the first tubular portion 11M1, and a second one of the connectable portions 12C is connected to the second connection portion 11C2 of the second tubular portion 11M2.

The main body 12A includes a flow passage 12A1 that serves as a passage for a heat medium. The flow passage 12A1 includes a first flow passage end connected to the first one of the two connectable portions 12C, and a second flow passage end connected to the second one of the two connectable portions 12C. In a state in which the heat exchanger 12 is connected to the base member 11, the flow passage 12A1 has the form of a bent line with bending points located at ends in the thickness-wise direction DT.

The heat exchanger 12 includes multiple reinforcement members 12B. In the example shown in Fig. 1, the heat exchanger 12 includes three reinforcement members 12B. In a state in which the heat exchanger 12 is attached to the base member 11, the reinforcement members 12B each extend in the thickness-wise direction DT. The three reinforcement members 12B are spaced apart from one another in the longitudinal direction DL. The reinforcement members 12B are mounted on an outer surface of the main body 12A so that each reinforcement member 12B is located between adjacent parts of the flow passage 12A1 in the longitudinal direction DL.

The main body 12A of the heat exchanger 12 is formed by, for example, a film laminate. Accordingly, the main body 12A is flexible and is expandable by the heat medium supplied to the main body 12A. The film laminate has two or more layers. The film laminate includes, for example, a resin film and a metal foil. The connectable portions 12C are formed from resin. The reinforcement members 12B are formed from, for example, metal.

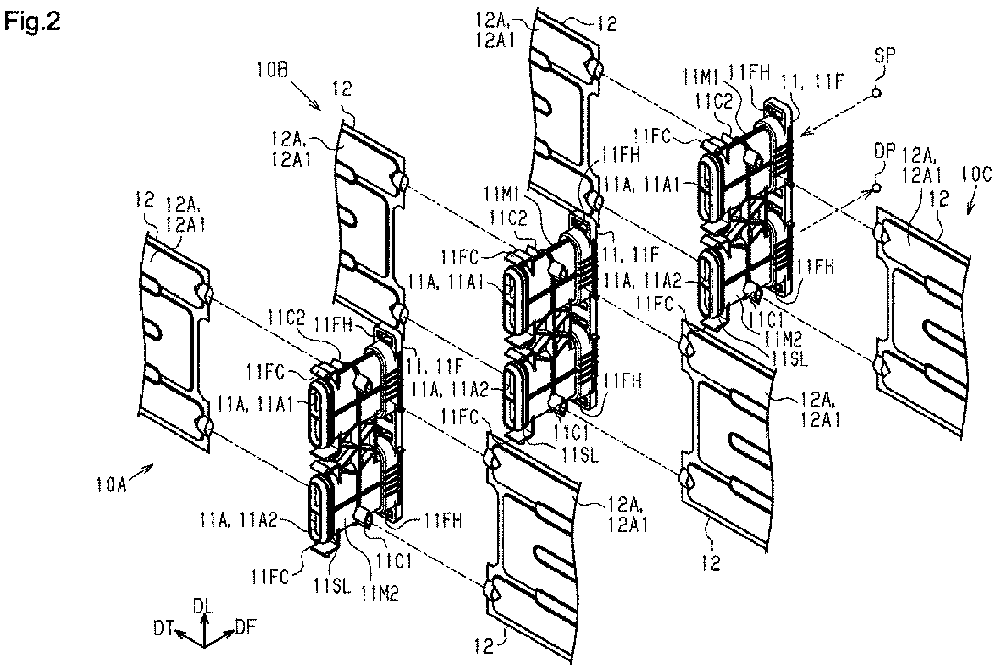

As shown in Fig. 2, a heat exchanging device may include, for example, three or more heat exchange modules 10. In the example shown in Fig. 2, the heat exchanging device includes three heat exchange modules 10. A first heat exchange module 10A, a second heat exchange module 10B, and a third heat exchange module 10C are arranged in this order in the flow direction DF. The heat exchange modules 10A, 10B, and 10C each have the same structure as the heat exchange module 10 described above.

When assembling the heat exchanging device, the fitting claws 11FC of the base member 11 of the second heat exchange module 10B are fitted into the fitting holes 11FH of the base member 11 of the first heat exchange module 10A. Further, the fitting claws 11FC of the base member 11 of the third heat exchange module 10C are fitted into the fitting holes 11FH of the base member 11 of the second heat exchange module 10B. In this manner, the first passages 11A1 of the base members 11 are connected to one another, and the second passages 11A2 of the base members 11 are connected to one another. In this case, the sealing members 11SL seal the gaps in the flow passages 11A.

The base member 11 of the first heat exchange module 10A includes a part that closes an end of the base member 11 located opposite to an end connected to the second heat exchange module 10B. Further, the base member 11 of the third heat exchange module 10C is connected to, for example, a supply pipe SP that supplies a heat medium before heat exchange to the first tubular portion 11M1 and a discharge pipe DP that discharges the heat medium after heat exchange from the second tubular portion 11M2.

When the heat exchanging device is in use, a subject of heat exchange is disposed between two adjacent heat exchangers 12 in the flow direction DF. A heat medium pumped by a pump (not shown) is supplied through the supply pipe SP to the first tubular portion 11M1 of the base member 11 of the third heat exchange module 10C, and some of the heat medium is supplied from the first tubular portion 11M1 of the base member 11 of the second heat exchange module 10B to the first tubular portion 11M1 of the base member 11 of the first heat exchange module 10A.

Also, some of the heat medium supplied to the first tubular portion 11M1 of each base member 11 is supplied to a corresponding heat exchanger 12 connected to the base member 11, and flows through the flow passage 12A1 of the heat exchanger 12 to the second tubular portion 11M2 of the base member 11. When the heat medium flows through the flow passage 12A1 of the heat exchanger 12, the heat medium exchanges heat with the subject through the main body 12A of the heat exchanger 12. In this manner, the heat medium cools or heats the subject.

The heat medium that reaches the second tubular portion 11M2 of the base member 11 of each of the heat exchange modules 10A, 10B, and 10C flows through the flow passage 11A, defined by the three second tubular portions 11M2, to the discharge pipe DP.

Alternatively, the supply pipe SP may be connected to the second tubular portion 11M2 of the base member 11 of the third heat exchange module 10C, and the discharge pipe DP may be connected to the first tubular portion 11M1 of the base member 11 of the third heat exchange module 10C. In this case, a heat medium is supplied to the flow passage 11A, which is formed by the second tubular portions 11M2 of the base members 11 that are continuous with one another, and the heat medium flows to the flow passage 11A, which is formed by the first tubular portions 11M1 of the base members 11 that are continuous with one another. Some of the heat medium supplied to the second tubular portion 11M2 of each base member 11 flows from the second tubular portion 11M2 through a corresponding heat exchanger 12 connected to the base member 11 to the first tubular portion 11M1.

In the heat exchanging device, the fitting claws 11FC and the fitting holes 11FH of the base members 11 may be used to readily change the number of base members 11 that are continuous with one another. Therefore, the heat exchange modules 10 allow for adjustment of the size of the space occupied by the heat exchanging device in accordance with the size of the space in which the heat exchanging device is to be installed.

In the heat exchange module 10, the heat exchanger 12 extends in the thickness-wise direction and is connected to the flat base member 11 at the two opposite sides in the thickness-wise direction. Accordingly, a space is formed between two heat exchangers 12 and the base member 11 for arrangement of the subject of heat exchange. Therefore, the components of a plurality of heat exchange modules 10 or the subjects of heat exchange occupy the space in which the heat exchanging device including the heat exchange modules 10 is installed, so that there is little unused or empty part. As a result, the installation space for the heat exchanging device is utilized effectively.

In the heat exchanging device, the flow passage 11A through which the heat medium flows in a first flow direction DF and the flow passage 11A through which the heat medium flows in a second flow direction DF, which is opposite to the first flow direction DF, are located at the same position in the thickness-wise direction DT. This reduces the space occupied by the heat exchanging device as compared to when the flow passage that supplies the heat medium to the heat exchanger 12 and the flow passage that discharges the heat medium from the heat exchanger 12 are located at different positions in the thickness-wise direction DT.

### Base Member

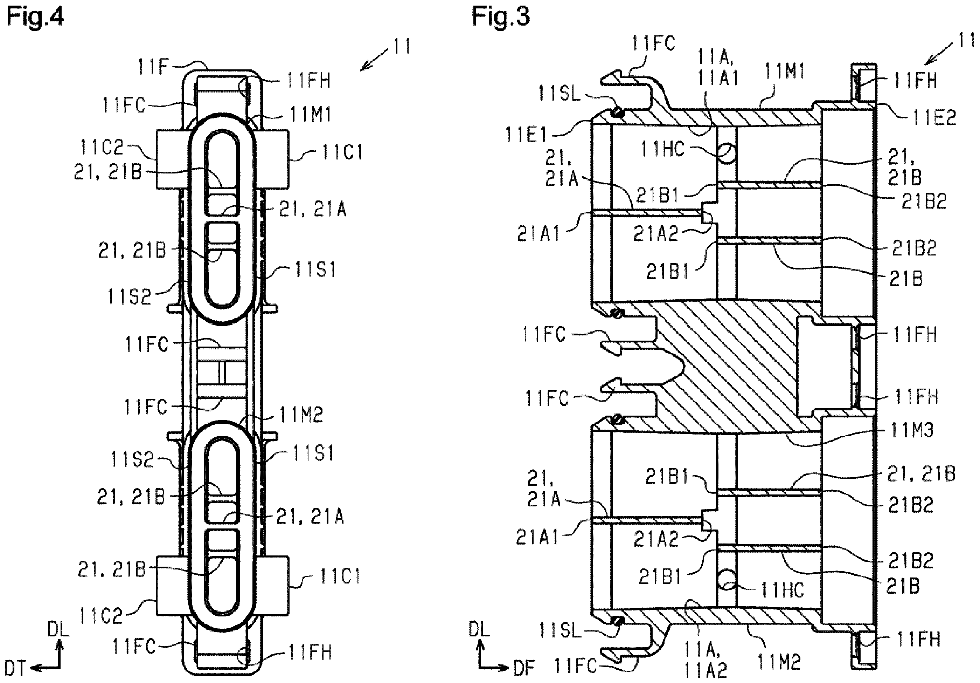

The base member 11 will now be described in more detail with reference to Figs. 3 and 4.

Fig. 3 shows a cross-sectional structure of the base member 11 along a plane defined by the flow direction DF and the longitudinal direction DL.

As shown in Fig. 3, the base member 11 includes the flow passage 11A described above. The flow passage 11A connects a first end 11E1 of the base member 11 and a second end 11E2 opposite to the first end 11E1. As described above, the base member 11 includes the first tubular portion 11M1 and the second tubular portion 11M2. Two ends of each of the tubular portions 11M1 and 11M2 in the flow direction DF correspond to the first end 11E1 and the second end 11E2 of the base member 11. The first tubular portion 11M1 has the first flow passage 11A1, and the second tubular portion 11M2 has the second flow passage 11A2. The flow passages 11A1 and 11A2 extend from one end to the other end of the tubular portions 11M1 and 11M2 in the flow direction DF.

In the base member 11, the second tubular portion 11M2 has the structure of the first tubular portion 11M1 that is reversed upside down in the longitudinal direction DL. Therefore, only the shape of the first tubular portion 11M1 will be described in detail.

The base member 11 includes support posts 21 arranged in the flow passage 11A. The support posts 21 include a first support post 21A and a second support post 21B. The first support post 21A and the second support post 21B are separated from each other in the longitudinal direction DL. The first support post 21A is separate from the second end 11E2. The second support post 21B is separated from the first end 11 E1.

With the heat exchange module 10 in accordance with the present disclosure, the base member 11 is flat so that the space occupied by the heat exchange module 10 is reduced. As a result, the heat exchange module 10 can be installed in a relatively small space. Further, when the heat medium flowing through the flow passage 11A collides with the support posts 21, the heat medium may flow in the longitudinal direction DL through the gap between the ends 11E1 and 11E2 of the base member 11 in the flow direction DF and the support posts 21. This reduces unevenness in the temperature of the heat medium.

Each of the support posts 21 is a rib extending in the flow direction DF. Therefore, the heat medium flows along the support posts 21 such that the flow of the heat medium is not hindered by the support posts 21. Each of the support posts 21 is plate-shaped and extends in the flow direction DF. The support post 21 has a plate shape that extends along a plane orthogonal to a plane defined by the flow direction DF and the longitudinal direction DL. The support post 21 may have a plate shape that intersects a plane defined by the flow direction DF and longitudinal direction DL at an angle other than right angle.

The first support post 21A may include a portion located closer to the first end 11 E1 than the second support post 21B is in the flow direction DF, and the second support post 21B may include a portion located closer to the second end 11E2 than the first support post 21A is in the flow direction DF. In this case, at least part of the first support post 21A is separated from the second support post 21B in the flow direction DF. Therefore, the heat medium flowing in the flow passage 11A also readily flows in the longitudinal direction DL. This facilitates mixing of the heat medium in the flow passage 11A.

In the example shown in Fig. 3, the entire first support post 21A is located closer to the first end 11E1 than the second support post 21B is, in the flow direction DF. Also, the entire second support post 21B is located closer to the second end 11E2 than the first support post 21A is, in the flow direction DF. In this case, the first support post 21A and the second support post 21B, which are separated from each other in the longitudinal direction DL, are also located at different positions in the flow direction DF. Therefore, the heat medium flowing through the flow passage 11A also readily flows in the longitudinal direction DL.

The first support post 21A includes a third end 21A1 and a fourth end 21A2 opposite to the third end 21A1 in the flow direction DF. The second support post 21B includes a fifth end 21B1 and a sixth end 21B2 opposite to the fifth end 21B1 in the flow direction DF. The third end 21A1 of the first support post 21A is closer to the first end 11E1 of the base member 11 than the fourth end 21A2 is in the flow direction DF. The sixth end 21B2 of the second support post 21B is closer to the second end 11E2 of the base member 11 than the fifth end 21B1 is in the flow direction DF.

In the example shown in Fig. 3, a gap is provided between the fourth end 21A2 of the first support post 21A and the fifth end 21B1 of the second support post 21B in the flow direction DF. Therefore, the flow passage 11A is divided by only one of the first support post 21A and the second support post 21B in the longitudinal direction DL. This appropriately maintains the width of the flow as compared to when the flow passage 11A is narrowed by both the first support post 21A and the second support post 21B in the longitudinal direction DL. Also, the heat medium flows through the gap between the first support post 21A and the second support post 21B in the flow direction DF. This facilitates the flow of the heat medium.

The support posts 21 may include a plurality of either the first support post 21A or the second support post 21B. In this case, the other of the first support post 21A or the second support post 21B may be located in between the plurality of first support post 21A or second support post 21B in the longitudinal direction DL. Accordingly, when the heat medium flows from the first support post 21A toward the second support post 21B or from the second support post 21B toward the first support post 21A, the flow of heat medium is changed at the boundary between the two types of support posts 21A and 21B. This facilitates mixing of the heat medium in the longitudinal direction DL, thereby reducing unevenness in the temperature of the heat medium.

In the example shown in Fig. 3, the support posts 21 arranged in one flow passage 11A includes a plurality of second support posts 21B. The support posts 21 include one first support post 21A and two second support posts 21B. The first support post 21A is located at a central part of the flow passage 11A in the longitudinal direction DL. A first one of the second support posts 21B is located upward from the first support post 21A in the longitudinal direction DL. A second one of the second support posts 21B is located downward from the first support post 21A in the longitudinal direction DL. Accordingly, the single first support post 21A is located between the two second support posts 21B in the longitudinal direction DL.

The support posts 21 arranged in one flow passage 11A may include a plurality of first support posts 21A. For example, when the support posts 21 include two first support posts 21A and one second support post 21B, the single second support post 21B may be located between the two first support posts 21A in the longitudinal direction DL.

The base member 11 includes a through hole 11HC arranged in the flow passage 11A. The through hole 11HC extends through the base member 11 in the thickness-wise direction DT. The through hole 11HC is located at substantially the center of the flow passage 11A in the flow direction DF. The through hole 11HC is continuous with the space defined by the second connecting portion 11C2 of the base member 11. Accordingly, the heat medium in the flow passage 11A is supplied through the through hole 11HC and the second connecting portion 11C2 to the heat exchanger 12 connected to the base member 11.

Fig. 4 shows the structure of the base member 11 as viewed from a viewpoint facing a plane defined by the longitudinal direction DL and the thickness-wise direction DT.

As shown in Fig. 4, the base member 11 includes the above-described first side surface 11S1 and second side surface 11S2. The first side surfaces 11S1 extends along a plane defined by the flow direction DF and the longitudinal direction DL. The second side surface 11S2 opposes the first side surface 11S1 in the thickness-wise direction DT. The support posts 21 each connect the first side surface 11S1 and the second side surface 11S2. Since the support posts 21 connect the first side surface 11S1 and the second side surface 11S2, the base member 11 withstands the heat medium having a relatively high pressure as compared to when the first side surface 11S1 and the second side surface 11S2 are not supported.

In the example shown in Fig. 4, the first support post 21A connects the first side surface 11S1 to the second side surface 11S2 at substantially the center of the first tubular portion 11M1 in the longitudinal direction DL. The first one of the second support posts 21B connects the first side surface 11S1 to the second side surface 11S2 at a position upward from the first support post 21A in the longitudinal direction DL. The second one of the second support posts 21B connects the first side surface 11S1 to the second side surface 11S2 at a position downward from the first support post 21A in the longitudinal direction DL.

The support posts 21 connect the first side surface 11S1 to the second side surface 11S2 at different locations in the longitudinal direction DL, so that the support posts 21 reinforce the base member 11 in a relatively wide range in the longitudinal direction DL. Consequently, the base member 11 withstands the heat medium having a relatively high pressure as compared to when the base member 11 includes only one support post 21.

As described above, the heat exchange module in accordance with the embodiment has the following advantages.
(1) The base member 11 is flat. This reduces the space occupied by the heat exchange module 10 and allows the heat exchange module 10 to be installed in a relatively small space. Further, the heat medium flowing through the flow passage 11A may collide with the support posts 21 and flow in the longitudinal direction DL through the gap between the ends of the base member 11 in the flow direction DF and the support posts 21. This reduces unevenness in the temperature of the heat medium.
(2) At least part of the first support post 21A is separated from the second support post 21B in the flow direction DF. Therefore, the heat medium flowing in the flow passage 11A also readily flows in the longitudinal direction DL. This facilitates mixing of the heat medium in the flow passage 11A.
(3) Since the support posts 21 connect the first side surface 11S1 and the second side surface 11S2, the base member 11 withstands the heat medium having a relatively high pressure as compared to when the first side surface 11S1 and the second side surface 11S2 are not supported.
(4) The subject of heat exchange can be disposed along the side surfaces 11S1 and 11S2 of the base member 11.
(5) Each of the support posts 21 has the form of a rib. Therefore, the heat medium flows along the support posts 21 such that the flow of the heat medium is not hindered by the support posts 21.
(6) The flow passage 11A is divided by only one of the first support post 21A and the second support post 21B in the longitudinal direction DL. Therefore, the width of the flow is appropriately maintained as compared to when the flow passage 11A is narrowed by both the first support post 21A and the second support post 21B in the longitudinal direction DL. This facilitates the flow of the heat medium.
(7) When the heat medium flows from the first support post 21A toward the second support post 21B or from the second support post 21B toward the first support post 21A, the flow of heat medium is changed at the boundary between the two types of support posts 21A and 21B. This facilitates mixing of the heat medium in the longitudinal direction DL, thereby reducing unevenness in the temperature of the heat medium.

The above-described embodiment may be modified as follows.

### Support Post

The fourth end 21A2 of the first support post 21A may be located at the same position as the fifth end 21B1 of the second support post 21B in the flow direction DF. Even in this case, advantage (6) is obtained.

When the first support post 21A includes a portion located closer to the first end 11 E1 than the second support post 21B is in the flow direction DF, the second support post 21B may entirely overlap the first support post 21A in the flow direction DF. Alternatively, when the second support post 21B includes a portion located closer to the second end 11E2 than the first support post 21A is in the flow direction DF, the first support post 21A may entirely overlap the second support post 21B in the flow direction DF.

The support posts 21 may include a plurality of first support posts 21A and a plurality of second support posts 21B. In this case, a single second support post 21B may be located between two first support posts 21A in the longitudinal direction DI. Further, a single first support post 21A may be located between two second support posts 21B in the longitudinal direction DL.

When the support posts 21 are located at different positions in the longitudinal direction DL, the support posts 21 may be located at the same position in the flow direction DF. Specifically, the two opposite ends of the support posts 21 may be located at the same position in the flow direction DF.

The support posts 21 of the first tubular portion 11M1 may differ from the support posts 21 of the second tubular portion 11M2 in at least one of the quantity and the layout.

### Base Member

The base member 11 may include only one of the first tubular portion 11M1 or the second tubular portion 11M2. In this case, the heat exchanging device may have a structure in which the supply pipe SP of the heat medium is connected to the base member 11 located at one end in the flow direction DF, and the discharge pipe DP of the heat medium is connected to the base member 11 located at the other end in the flow direction DF. Furthermore, each base member 11 may include the through hole 11HC that supplies the heat medium to the heat exchanger 12 and the through hole 11HC that discharges the heat medium from the heat exchanger 12 in the same flow passage 11A.

### Heat Medium

The heat medium supplied to the heat exchange module 10 may be a cooling medium or a heating medium.

## Claims

1. A heat exchange module (10), comprising:
a base member (11) having a flattened tubular shape; and
a heat exchanger (12) branched from the base member (11), wherein:
the base member (11) includes
a flow passage (11A) connecting a first end (11E1) of the base member (11) and a second end (11E2) opposite to the first end (11E1), and
support posts (21) arranged in the flow passage (11A);
the flow passage (11A) extends in a flow direction in which a heat medium flows, and a direction orthogonal to the flow direction is a longitudinal direction;
the support posts (21) include a first support post (21A) and a second support post (21B),
wherein
each of the support posts (21) is a rib extending in the flow direction;
the first support post (21A) and the second support post (21B) are separated from each other in the longitudinal direction;
the first support post (21A) is separated from the second end (11E2);
the second support post (21B) is separated from the first end (11E1); and wherein
the base member (11) includes
a first side surface (11S1) extending along a plane defined by the flow direction and the longitudinal direction and
a second side surface (11S2) opposing the first side surface (11S1);
each of the support posts (21) connects the first side surface (11S1) and the second side surface (11S2); and
the first side surface (11S1) includes a connecting portion (11C1) to which the heat exchanger (12) is connected.

2. The heat exchange module (10) according to claim 1, wherein
the first support post (21A) includes a portion located closer to the first end (11E1) than the second support post (21B) is in the flow direction, and
the second support post (21B) includes a portion located closer to the second end (11E2) than the first support post (21A) is in the flow direction.

3. The heat exchange module (10) according to claim 2, wherein
the first support post (21A) includes a third end (21A1) in the flow direction and a fourth end (21A2) opposite to the third end (21A1),
the second support post (21B) includes a fifth end (21B1) in the flow direction and a sixth end (21B2) opposite to the fifth end (21B1),
the third end (21A1) of the first support post (21A) is closer to the first end (11E1) of the base member (11) than the fourth end (21A2) is in the flow direction,
the sixth end (21B2) of the second support post (21B) is closer to the second end (11E2) of the base member (11) than the fifth end (21B1) is in the flow direction, and
the fourth end (21A2) of the first support post (21A) and the fifth end (21B1) of the second support post (21B) are located at the same position in the flow direction.

4. The heat exchange module (10) according to claim 2 or 3, wherein
the first support post (21A) is one of multiple first support posts (21A), and
the second support post (21B) is located between two of the first support posts (21A) in the longitudinal direction.

5. The heat exchange module (10) according to claim 2 or 3, wherein
the second support post (21B) is one of multiple second support posts (21B), and
the first support post (21A) is located between two of the second support posts (21B) in the longitudinal direction.

## Patentansprüche

1. Wärmetauschmodul (10), umfassend:
ein Basiselement (11) mit einer abgeflachten Röhrenform; und
einen Wärmetauscher (12), der von dem Basiselement (11) abzweigt, wobei
das Basiselement (11) aufweist:
eine Strömungspassage (11A), die ein erstes Ende (11E1) des Basiselements (11) und ein dem ersten Ende (11E1) gegenüberliegendes zweites Ende (11E2) verbindet, sowie
in der Strömungspassage (11A) angeordnete Stützstäbe (21);
wobei die Strömungspassage (11A) sich in einer Strömungsrichtung erstreckt, in der ein Wärmemedium strömt, und eine zu der Strömungsrichtung orthogonale Richtung eine Längsrichtung ist;
wobei die Stützstäbe (21) einen ersten Stützstab (21A) und einen zweiten Stützstab (21B) umfassen, wobei
jeder der Stützstäbe (21) eine Rippe ist, die sich in der Strömungsrichtung erstreckt;
der erste Stützstab (21A) und der zweite Stützstab (21B) in Längsrichtung voneinander beabstandet sind;
wobei der erste Stützstab (21A) von dem zweiten Ende (11E2) beabstandet ist;
wobei der zweite Stützstab (21B) von dem ersten Ende (11E1) beabstandet ist; und wobei
das Basiselement (11) aufweist:
eine erste Seitenfläche (11S1), die sich entlang einer durch die Strömungsrichtung und die Längsrichtung definierten Ebene erstreckt, und
eine der ersten Seitenfläche (11S1) gegenüberliegende zweite Seitenfläche (11S2);
wobei jeder der Stützstäbe (21) die erste Seitenfläche (11S1) und die zweite Seitenfläche (11S2) verbindet; und
die erste Seitenfläche (11S1) einen Verbindungsbereich (11C1) aufweist, an den der Wärmetauscher (12) angebunden ist.

2. Wärmetauschmodul (10) nach Anspruch 1, wobei
der erste Stützstab (21A) einen Bereich aufweist, der in der Strömungsrichtung näher an dem ersten Ende (11E1) angeordnet ist als der zweite Stützstab (21B), und
der zweite Stützstab (21B) einen Bereich aufweist, der in der Strömungsrichtung näher an dem zweiten Ende (11E2) angeordnet ist als der erste Stützstab (21A).

3. Wärmetauschmodul (10) nach Anspruch 2, wobei
der erste Stützstab (21A) ein drittes Ende (21A1) in Strömungsrichtung und ein dem dritten Ende (21A1) gegenüberliegendes viertes Ende (21A2) aufweist,
wobei der zweite Stützstab (21B) ein fünftes Ende (21B1) in der Strömungsrichtung und ein dem fünften Ende (21B1) gegenüberliegendes sechstes Ende (21B2) aufweist,
wobei das dritte Ende (21A1) des ersten Stützstabs (21A) in der Strömungsrichtung näher an dem ersten Ende (11E1) des Basiselements (11) angeordnet ist als das vierte Ende (21A2),
wobei das sechste Ende (21B2) des zweiten Stützstabs (21B) in der Strömungsrichtung näher an dem zweiten Ende (11E2) des Basiselements (11) angeordnet ist als das fünfte Ende (21B1), und
wobei das vierte Ende (21A2) des ersten Stützstabs (21A) und das fünfte Ende (21B1) des zweiten Stützstabs (21B) in Strömungsrichtung an der gleichen Position angeordnet sind.

4. Wärmetauschmodul (10) nach Anspruch 2 oder 3, wobei
der erste Stützstab (21A) einer von mehreren ersten Stützstäben (21A) ist, und
der zweite Stützstab (21B) in der Längsrichtung zwischen zwei der ersten Stützstäbe (21A) angeordnet ist.

5. Wärmetauschmodul (10) nach Anspruch 2 oder 3, wobei
der zweite Stützstab (21B) einer von mehreren zweiten Stützstäben (21B) ist, und
der erste Stützstab (21A) in der Längsrichtung zwischen zwei der zweiten Stützstäbe (21B) angeordnet ist.

## Revendications

1. Module d'échange de chaleur (10), comprenant :
un élément de base (11) ayant une forme tubulaire aplatie ; et
un échangeur de chaleur (12) se ramifiant à partir de l'élément de base (11), où
l'élément de base (11) comprend
un passage d'écoulement (11A) reliant une première extrémité (11E1) de l'élément de base (11) et une deuxième extrémité (11E2) opposée à la première extrémité (11E1), et
des tiges de support (21) agencées dans le passage d'écoulement (11A) ;
où le passage d'écoulement (11A) s'étend dans une direction d'écoulement dans laquelle un médium thermique s'écoule, et une direction orthogonale à la direction d'écoulement est une direction longitudinale ;
où les tiges de support (21) comprennent une première tige de support (21A) et une deuxième tige de support (21B),
où chacune des tiges de support (21) est une nervure s'étendant dans la direction d'écoulement ;
où la première tige de support (21A) et la deuxième tige de support (21B) sont séparées l'une de l'autre dans la direction longitudinale ;
la première tige de support (21A) étant séparée de la deuxième extrémité (11E2) ;
la deuxième tige de support (21B) étant séparée de la première extrémité (11E1) ; et où
où l'élément de base (11) comprend
une première surface latérale (11S1) s'étendant le long d'un plan défini par la direction d'écoulement et la direction longitudinale et
une deuxième surface latérale (11S2) opposée à la première surface latérale (11S1) ;
où chacune des tiges de support (21) relie la première surface latérale (11S1) et la deuxième surface latérale (11S2) ; et
la première surface latérale (11S1) inclut une partie à liaison (11C1) à laquelle l'échangeur de chaleur (12) est relié.

2. Module d'échange de chaleur (10) selon la revendication 1, où
la première tige de support (21A) comprend une partie située plus près de la première extrémité (11E1) que la deuxième tige de support (21B) dans la direction d'écoulement, et
la deuxième tige de support (21B) comprend une partie située plus près de la deuxième extrémité (11E2) que la première tige de support (21A) dans la direction d'écoulement.

3. Module d'échange de chaleur (10) selon la revendication 2, où
la première tige de support (21A) inclut une troisième extrémité (21A1) dans la direction d'écoulement et une quatrième extrémité (21A2) opposée à la troisième extrémité (21A1),
où la deuxième tige de support (21B) inclut une cinquième extrémité (21B1) dans la direction d'écoulement et une sixième extrémité (21B2) opposée à la cinquième extrémité (21B1),
où la troisième extrémité (21A1) de la première tige de support (21A) est plus près de la première extrémité (11E1) de l'élément de base (11) que la quatrième extrémité (21A2) dans la direction d'écoulement,
où la sixième extrémité (21B2) de la deuxième tige de support (21B) est plus près de la deuxième extrémité (11E2) de l'élément de base (11) que la cinquième extrémité (21B1) dans la direction d'écoulement, et
où la quatrième extrémité (21A2) de la première tige de support (21A) et la cinquième extrémité (21B1) de la deuxième tige de support (21B) sont situées à la même position dans la direction d'écoulement.

4. Module d'échange de chaleur (10) selon la revendication 2 ou 3, où
la première tige de support (21A) est l'une de plusieurs premières tiges de support (21A), et
la deuxième tige de support (21B) est situé entre deux des premières tiges de support (21A) dans la direction longitudinale.

5. Module d'échange de chaleur (10) selon la revendication 2 ou 3, où
la deuxième tige de support (21B) est l'une de plusieurs deuxièmes tiges de support (21B), et
la première tige de support (21A) est situé entre deux des deuxièmes tiges de support (21B) dans la direction longitudinale.
